Europäisches Patentamt

European Patent Office

Office européen des brevets

(11) Publication number: **0 238 876**
**A2**

## (12) EUROPEAN PATENT APPLICATION

(21) Application number: **87102642.3**

(22) Date of filing: **25.02.87**

(51) Int. Cl.⁴: **C08L 83/04 , C08K 3/36**

(30) Priority: **26.02.86 JP 40810/86**

(43) Date of publication of application:
**30.09.87 Bulletin 87/40**

(84) Designated Contracting States:
**BE DE FR GB**

(71) Applicant: **Toray Silicone Company, Ltd.**
**8, 2-chome Muro-machi Nihonbashi**
**Chuo-ku Tokyo 103(JP)**

(72) Inventor: **Saruyama, Toshio**
**3-11, Tsudanuma Narashino-shi**
**Chiba Prefecture(JP)**
Inventor: **Matsushita, Takao**
**9-18, 2-chome, Okubo Kisarazu-shi**
**Chiba Prefecture(JP)**

(74) Representative: **Spott, Gottfried, Dr. et al**
**Patentanwälte Spott und Puschmann**
**Sendlinger-Tor-Platz 11**
**D-8000 München 2(DE)**

(54) Silica-containing polyorganosiloxane compositions.

(57) In a silica-containing polyorganosiloxane composition of the present invention, because the ultrafine silica powder or its mixture with polyorganosiloxane has an acid strength, as measured by it's pKa value in nonpolar solvent, falling within a specific range of from greater than or equal to 4.0 and less than or equal to 9.2; the excellent effect accrues that the chemical composition of the polyorganosiloxane component will remain the same during production or during long-term storage.

EP 0 238 876 A2

## SILICA-CONTAINING POLYORGANOSILOXANE COMPOSITIONS

The present invention relates to an polyorganosiloxane composition which contains ultrafine silica powder; in which the chemical composition of the polyorganosiloxane component does not undergo any change during production of the composition or during long-term storage.

Compositions composed of ultrafine silica powder and polyorganosiloxane are widely used in the form of non-curing compositions such as greases and compounds, elastomer compositions such as sealants and heat-vulcanizing rubbers, and also solvent dispersions of these. In this regard, the ultrafine silica powder has the effect of improving the mechanical properties, for example, the tensile strength, or of adjusting the rheological properties of the polyorganosiloxane composition. Another reason for the use of ultrafine silica powder is that is has an extremely low chemical reactivity with respect to polyorganosiloxane.

Given the recent rigorous requirements on polyorganosiloxane compositions, it has become increasingly necessary to maintain strict control of, for example, the molecular weight of the principal polyorganosiloxane, the polyorganosiloxane secondary components which may be present in small amounts, or the quantity of functional groups present in small quantities in the polyorganosiloxane, in order the obtain the target properties. For example, when the target properties of the polyorganosiloxane composition depend on the polyorganosiloxane's molecular weight distribution, the targets cannot be accomplished when the molecular weight of the polyorganosiloxane undergoes variation during production or storage of the composition. Also, in order to produce a composition which essentially does not contain volatile polyorganosiloxane, the content of low polymeric polyorganosiloxane cyclics must be reduced to very low levels. Furthermore, in order to produce a composition in which noncrosslinking polyorganosiloxane will be absent from elastomer produced by the crosslinking of functional-terminated polyorganosiloxane, nonfunctional terminals must be entirely excluded from among the polyorganosiloxane terminal groups. Furthermore, in order to control the molecular weight distribution of the high molecular weight polymer to within the desired range, siloxane depolymerization at the time of mixing the ultrafine silica powder with polyorganosiloxane must be suppressed. In the great majority of cases, there must be no change in the polyorganosiloxane component or quantity of functional groups in the polyorganosiloxane, either at the time of production of the composition or during long-term storage.

Control of the polyorganosiloxane component or functional groups in the polyorganosiloxane is required even for polyorganosiloxane compositions containing ultrafine silica powder, but this art remains undeveloped. Various methods were examined by the present inventors, and it was found that polyorganosiloxane reacts by means of the ultrafine silica powder even at room temperature. This has not been a particular problem before now before this reaction is quite limited in almost all cases, and so proceeds to an extend which is not a problem in typical compositions.

On the other hand, when silica is mixed with high molecular weight polyorganosiloxane, the polyorganosiloxane is depolymerized by means of the unavoidable shear. It is known to the individual skilled in the art that the addition of particular types of low molecular weight siloxane compounds has the effect of preventing this depolymerization. However, the properties and particularly the rheological properties of the composition containing such low polymeric siloxane differ from those of the composition lacking such a siloxane. Also, because the low polymeric polyorganosiloxane is expensive, the obtained composition suffers from disadvantageous economics. For these reasons, a composition is required in which low polymeric polyorganosiloxane is not added. Hydrophobicized silica is frequently used as means for resolving this problem. However, the hydrophobicization treatment of silica is expensive, so the economic disadvantage cannot be eliminated. Due to this, the development is required of a technology by which an untreated silica can be mixed with high molecular weight polyorganosiloxane without the use of an expensive additive and without depolymerization.

It is known that ultrafine silica powder exhibits activity with respect to polyorganosiloxane. For example, with regard to silicone elastomers, one encounters "crepe hardening," in which the hardness of the polyorganosiloxane-ultrafine silica powder mixture increases with time. It has been found that this is due to time-dependent changes in the degree of adsorption by polyorganosiloxane on the surface of the ultrafine silica powder.

Furthermore, it is also known that thermal decomposition of polyorganosiloxane by means of silica is one cause of the thermal degradation of the cured rubber. However, the occurrence of this reaction at around room temperature has not yet been reported.

Many attempts at preventing the interaction of ultrafine silica powder with polyorganosiloxane have been proposed. These can roughly be classified into methods in which the surface of the ultrafine silica powder is treated in advance, and methods in which a third component for the treatment of the surface of the ultrafine silica powder is added at the time of addition to the polyorganosiloxane. Both methods have the same goal: hydrophobicization of the surface of the ultrafine silica powder.

Such methods for preventing interaction between the ultrafine silica powder and polyorganosiloxane do not provide control of the molecular weight of polyorganosiloxane, or of polyorganosiloxane components present in very small quantities or of polyorganosiloxane functional groups which are present in very small quantities. Using the same method, the suppression of polyorganosiloxane reaction and the absence of any change are uncertain. That is, the hydrophobicization of ultrafine silica powder is not directly related to polyorganosiloxane reactivity.

U.S. Pat. No. 2,870,108, issued Jan. 20, 1959, teaches a novel silica product produced by comminuting hydophilic silica and concurrently spraying with tetraethylorthosilicate. U.S. Pat. No. 2,870,109, issued Jan. 20, 1959, extends the process to one using a coating of a dimethyl silicone oil and silica having an acid number of between 0.1 and 0.8.

U.S. Pat. No. 3,024,126, issued Mar. 6, 1962, teaches a method of treating silica with well-known functional silanes and siloxanes in contact with certain amine, quaternary ammonium and organometallic compounds.

U.S. Pat. No. 3,031,352, issued Apr. 24, 1962, teaches a composition comprising an organopolysiloxane, a structure-inducing filler, and an organic carbonate.

U.S. Pat. No. 3,635,743, issued Jan. 18, 1972, teaches an improved reinforcing silica filler made by first treating with ammonia, amine, or aminoxy compound, and then with a silylating agent.

A treated silica particularly useful in low viscosity silicone elastomer bases is taught in U.S. Pat. No. 4,173,560, issued Nov. 6, 1979. The silica is treated with a short chain linear amidosiloxane.

The causes of the very limited reaction of polyorganosiloxane by means of ultrafine silica powder, which occurs even at room temperature, and methods for its suppression were examined by the present inventors, and this invention was developed as a result.

## Summary of the Invention

The present invention provides a silica-containing polyorganosiloxane composition in which the chemical composition of the polyorganosiloxane. component does not undergo any change during production of the composition or during long-term storage. This is accomplished through the use of an ultrafine silica powder which has an acid strength in nonpolar solvent of greater than or equal to 4.0 and less than or equal to 9.2.

It is an object of this invention to produce a mixture of polyorganosiloxane and ultrafine silica powder in which the chemical composition of the polyorganosiloxane component does not undergo any change during production of the composition or during long-term storage.

## Description of the Invention

This invention relates to a silica-containing polyorganosiloxane composition comprising polyorganosiloxane and ultrafine silica powder, the ultrafine silica powder having an acid strength of greater than or equal to 4.0 and less than or equal to 9.2 in nonpolar solvent.

This invention relates to a silica-containing polyorganosiloxane composition comprising polyorganosiloxane, ultrafine silica powder, and a third component which causes the acid strength of the polyorganosiloxane-ultrafine silica powder mixture to have an acid strength of greater than or equal to 4.0 and less than or equal to 9.2 in nonpolar solvent.

The ultrafine silica powder is the component which is characteristic of the invention. As is well known, ultrafine silica powder can roughly be classified into 2 types according to the method of production. The first is silica produced by the reaction of tetrachlorosilane in the oxyhydrogen flame, known as fumed silica or dry-method silica. The second is silica produced by reacting water glass with acid and removing the water and salt, and this is called wet-method silica. Both dry-method and wet-method silicas can be used in the present invention. For purposes of this invention, ultrafine silica is defined as that silica having a surface area of greater than 50 m²/g.

Ultrafine silica powder is intrinsically hydrophilic due to the silanol groups on its surface, but silica with a hydrophobicized surface can also be used. Such hydrophobic treatments are exemplified by treatment with chlorosilane, treatment with silazane, treatment with an alkoxysilicon compound and treatment with low molecular weight polyorganosiloxane.

The present invention encompasses ultrafine silica powder whose surface has been subjected to any hydrophobicization treatment. However, as discussed above, a hydrophobicization treatment alone cannot accomplish the object of the present invention, i.e., no change in the chemical composition of the polyorganosiloxane component in long-term storage.

In the absence of a third component which causes the acid strength of the mixture of polyorganosiloxane and ultrafine silica powder to be greater than or equal to 4.0 and equal to or less than 9.2 in nonpolar solvent, the acid strength of the ultrafine silica powder itself must be greater than or equal to 4.0 and equal to or less than 9.2 in nonpolar solvent. When said third component is present, the properties of the ultrafine silica powder are not specifically restricted. The acid strength of the ultrafine silica powder can be adjusted by treating the silica with acid or base as required, in the required amount, to adjust the silica to the required acid strength. For example, normally acid fumed silica can be reacted with dilute sodium hydroxide, dried, and pulverized, to give silica in the required range of acid strength.

The measurement of acid strength in a nonpolar solvent is an essential element of the present invention. With regard to the acid strength of silica, it is usually measured in an aqueous disperse system in the case of hydrophilic silica, and in water/alcohol mixed solvent system in the case of hydrophobicized silica. However, the essential condition on the composition of the present invention cannot be ascertained by these measurement methods because of their lack of correlation with the reactivity of polyorganosiloxane in the presence of silica. Non-polarity signifies the absence of dissociable, active hydrogen. Aromatic hydrocarbons such as benzene and saturated hydrocarbons such as cyclohexane or n-heptane are appropriate as solvents which satisfy this requirement. Benzene and cyclohexane are optimal for conducting accurate measurements.

The acid strength as specified herein is concretely expressed by the pKa value. Accordingly, this is a scale which includes not only the acidic region, but also the basic region, at pKa values equal to or greater than 7.0. The acid strength can be obtained from the color of added indicator, that is, it can be determined by adding a few drops of 0.05 to 0.1 percent indicator solution. Although a mixed indicator with a narrow transition interval and the visible absorption spectrum can be used in combination to conduct more sensitive measurements, the aforementioned simple method is satisfactory for executing the invention.

Execution of the present invention requires an acid strength, that is, a pKa value, of greater than or equal to 4.0 and less than or equal to 9.2. "Greater than or equal to" and "less than or equal to" signifies the inclusion of the case in which the indicator just falls within the transition interval. Naphthyl red can be recommended as an indicator for which the transition interval pKa value is 4.0, and Thymol blue can be recommended as an indicator corresponding to the value of 9.2. Outside of this range, polyorganosiloxane will undergo chemcial reaction during production of the composition or during storage, and the objective of control of the polyorganosiloxane component or of polyorganosiloxane functional groups is not possible.

The polyorganosiloxane component is the principal component of the composition of the present invention, and its molecular configuration may be either straight chain or branched chain as long as it possesses a chain-form siloxane skeleton. Other than the oxygen atoms of the siloxane bond, hydrogen, hydroxyl groups, organic groups and hydrolyzable groups may be bonded to silicon in said polyorganosiloxane. The organic groups are exemplified by alkyl groups such as methyl, ethyl, propyl and n-octyl; alkenyl groups such as vinyl and allyl; aryl groups such as phenyl and naphthyl; cycloalkyl groups such as cyclohexyl and cycloheptyl; haloalkyl groups such as 3-chloropropyl and 3,3,3-trifluoropropyl; and aralkyl groups such as 2-phenylethyl and 2-phenylpropyl. The hydrolyzable groups are functional groups which hydrolyze to give the silanol group, and all such groups known in the art are applicable herein. Concrete examples are alkoxy groups, acyloxy groups, amino groups, amide groups, aminoxy groups, oxime groups and alkenoxy groups. With regard to these hydrogen, hydroxyl, organic and hydrolyzable groups, a single species may be present in one molecule, or two or more species may be present. In general, only methyls or methyl plus another organic group, hydrogen, hydroxyl or a hydrolyzable group, is present. The molecular weight of the polyorgano siloxane is not specifically restricted, that is, it may range from a dimer up to molecular weights of more than 1,000,000. In addition, 2 or more species of polyorganosiloxane can be used in combination.

When the acid strength of the ultrafine silica powder does not fall within the range of greater than or equal to 4.0 and less than or equal to 9.2 in nonpolar solvent, the presence is the indispensable of a third component which causes the acid strength of the polyorganosiloxane-ultrafine silica powder mixture to be greater than or equal to 4.0 and less than or equal to 9.2 in nonpolar solvent. Selection of this component and its quantity of addition can be determined by model tests. That is, the mixture of polyorganosiloxane and ultrafine silica powder is dispersed in nonpolar solvent, indicator is added and the aforementioned component is then titrated. The polyorganosiloxane used in this procedure need not be the one used in the actual composition, and the blending ratio of polyorganosiloxane and ultrafine silica powder is not specifically restricted. Rather, the model test is to be conducted using conditions under which titration is facilitated. For this reason, the polyorganosiloxane should have a viscosity of 50 cS at 25°C, and the polyorganosiloxane to ultrafine silica powder weight ratio is preferably approximately 10/1.

The third component is exemplified by alkali metal-containing siloxanes and alkali metal silanolate, such as potassium silanolate and sodium silanolate; by alkali metal caboxylate such as potassium butoxide, by alkaline earth metal salts such as alkaline earth metal carboxylate such as calcium stearate, and by organic amines such as triethylamine and tri-n-butylamine.

The composition of the present invention can be produced by mixing polyorganosiloxane with ultrafine silica powder with an acid strength of greater than or equal to 4.0 and less than or equal to 9.2 in nonpolar solvent; or by mixing polyorganosiloxane with both ultrafine silica powder and the third component which causes the acid strength of the mixture of polyorganosiloxane and ultrafine silica powder to be greater than or equal to 4.0 and less than or equal to 9.2 in nonpolar solvent. The order, temperature, pressure and shear conditions in mixing are not specifically restricted. After mixing the one part of the polyorganosiloxane with the ultrafine silica powder or with the ultrafine silica powder plus said third component, polyorganosiloxane component which will be present in small quantities and polyorganosiloxane containing very small quantities of polysiloxane funtional groups may then be added. Also, a fourth component such as a crepe hardening inhibitor may be added.

As necessary, non-siloxane polymers; organic solvents; crosslinking agents such as hydrolyzable silane; condensation crosslinking promoters such as tin carboxylates; crosslinking reaction inhibitors; thermal stabilizers such as iron oxide and rare earth compounds; flame retardants such as manganese carbonate, fumed titanium and platinum compounds; as well as quartz powder; diatomaceous earth; glass fiber; and carbon black can be blended into the composition of the present invention.

The silica-containing polyorganosiloxane composition produced as above can be used in the form of a paste, plastic mass or dispersion or, alternatively, it may be appropriately used as a curable silicone elastomer composition by adding a crosslinker.

The following examples are included for illustrative purposes only and should not be construed as limiting the invention which is properly set forth in the appended claims. In the examples, part signifies weight parts and Me refers to the methyl group.

Measurement of the Acid Strength

In the preparation of several test tubes, approximately 0.1 g of the ultrafine silica powder and approximately 5 mL benzene are both placed in each test tube and then mixed. A few drops are added of a 0.1 weight percent solution of an indicator with a transition point at the respective pKa value, followed by shaking. The acid strength is evaluated from the transitions. The silica sediments with standing, and, in some cases, the color of the solution differs from that of the sediment. In such cases, the acid strength was evaluated from the color of the sediment.

Preparation of Ultrafine Silica Powders

(A) 30.0 g wet-method silica (Nipsil LP from Nippon Silica Industry Co., Ltd.) was dispersed in 500 g water, 200 mL 0.1 N aqueous sodium hydroxide was added and this was mixed for 1 hour, followed by filtration, drying at 150° for 6 hours, pulverization and passage through a 200 mesh filter.

(B) The method described in (A) was followed, with the exception that 400 mL 0.1 N aqueous sodium hydroxide was used.

(Comparison Example 1) The method described in (A) was followed, with the exception that the concentration of the aqueous sodium hydroxide solution was 1 N.

(C) 30.0 g dry-method silica (Aerosil 200 from Nippon Aerosil Co., Ltd.) was dispersed in 800 g water, 150 mL 0.1 N aqueous sodium hydroxide was added, and this was mixed for 1 hour, followed by filtration, drying at 150° for 6 hours, pulverization and passage through a 200 mesh filter.

(D) 30.0 g wet-method silica (Nipsil LP from Nippon Silica Industry Co., Ltd.) was dispersed in 200 g n-hexane, 0.5 g triethylamine was added, and this was mixed for 1 hour, followed by 5 cycles of filtration and washing with n-hexane, then drying at 120° for 3 hours, pulverization and passage through a 200 mesh filter.

(E) 30.0 g dry-method silica (Aerosil 200 from Nippon Aerosil Co., Ltd.) was dispersed in 200 g n-hexane, 0.4 g triethylamine was added, and this was mixed for 1 hour, followed by 5 cycles of filtration and washing with n-hexane, then drying at 120° for 3 hours, pulverization and passage through a 200 mesh filter.

(F) 30.0 g hydrophobic dry-method silica (R972 from Nippon Aerosil Co., Ltd.) was dispersed in 200 g n-hexane, 0.1 g triethylamine was added, and this was mixed for 1 hour, followed by 5 cycles of filtration and washing with n-hexane, then drying at 120° for 3 hours, pulverization and passage through a 200 mesh filter .

(G) 1.0 g calcium stearate was added to 30.0 g wet-method silica (Nipsil LP from Nippon Silica Industry Co., Ltd.) and this was mixed to homogeneity by stirring at room temperature for 1 day, followed by heating at 180° for 2 hours.

(H) 1.0 g calcium stearate was added to 30.0 g dry-method silica (Aerosil 200 from Nippon Aerosil Co., Ltd.) and this was mixed to homogeneity by stirring at room temperature for 1 day, followed by heating at 180° for 2 hours.

The results from the measurement of the acid strength of these ultrafine silica powders are reported in Table 1.

## TABLE I

| | pKa |
|---|---|
| silica (A) | 4.0 ~ 4.8 |
| silica (B) | 4.8 |
| silica (C) | 4.8 ~ 6.8 |
| silica (D) | 4.8 ~ 6.8 |
| silica (E) | 6.8 ~ 9.2 |
| silica (F) | 4.8 ~ 6.8 |
| silica (G) | 4.8 ~ 6.8 |
| silica (H) | 4.8 ~ 6.8 |
| Comparison Example 1 | >9.2 |
| Nipsil LP | 2.0 ~ 3.3 |
| Aerosil 200 | 3.3 ~ 4.0 |
| Aerosil R972 | 3.3 ~ 4.0 |

## EXAMPLE 1

Ten grams of a mixture of alpha, omega-divinylpolydimethylsiloxanes with degrees of polymerization of 10, 11 and 12 (25/65/10 molar ratio) was mixed with 1.0 g of silica (A), of silica (B), or the silica of Comparison Example (1) or Nipsil LP. The polymer component was centrifugally separated, either immediately after mixing or after aging for 1 month at 50°C. The polysiloxane component was then gas chromatographically analyzed. Table II reports the results from the determination of octamethylcyclotetrasiloxane in the systems using n-undecane as the internal standard: octamethylcyclotetrasiloxane, produced by depolymerization of the polysiloxane, was quite small for silicas (A) and (B). This demonstrates that the siloxane bond ($Me_2Si$-O-$SiMe_2$) scission activity of silicas (A) and (B) was lower than the other silicas.

## TABLE II

|  | octamethylcyclotetrasiloxane parts per million | |
|---|---|---|
|  | Immediately After Mixing | After One Month |
| silica (A) | 8 | 10 |
| silica (B) | 12 | 15 |
| Comparison Example (1) | 20 | 870 |
| Nipsil LP | 55 | 2030 |

EXAMPLE 2

Tests were conducted by the method of Example 1 using 10 g of a mixture of alpha, omega-dimethylpolydimethylsiloxanes with degrees of polymerization of 9, 10 and 11 (35/50/15 molar ratio) and 1.0 g of silica (C) or Aerosil 200. Table III reports the results from the determination of hexamethyldisiloxane, produced by depolymerization of the polysiloxane. Hexamethyldisiloxane production was small for silica (C). This demonstrates that, relative to the other silica, the scission activity of silica (C) for the terminal siloxane bond (Me₃Si-O-SiMe₂) was lower.

## TABLE III

|  | hexamethyldisiloxane parts per million | |
|---|---|---|
|  | Immediately After Mixing | After One Month |
| silica (C) | 15 | 80 |
| Aerosil 200. | 18 | 970 |

EXAMPLE 3

A mixture of 100 g alpha, omega-divinylpolydimethylsiloxane with a viscosity at 25°C of 13,000 cS was prepared by thoroughly mixing with 10 g of silica (D) or (E) or F or Nipsil LP or Aerosil 200 or R972 at room temperature, followed by the addition of 0.1 g 1,1,3,3-tetramethyldisiloxane. The polymer component was centrifugally separated immediately after mixing and after aging for 1 month at 50°C and the polysiloxane component was gas chromatographically analyzed. The results are reported in Table IV. The decline in the quantity of 1,1,3,3,-tetramethyldisiloxane, due to reaction with the polysiloxane, was small for silicas (D), (E) and (F).

## TABLE IV

| | 1,1,3,3-tetramethyldisiloxane parts per million | |
|---|---|---|
| | Immediately After Mixing | After One Month |
| silica (D) | 1010 | 950 |
| silica (E) | 990 | 960 |
| silica (F) | 980 | 980 |
| Nipsil LP | 920 | 50 |
| Aerosil 200 | 960 | 120 |
| Aerosil R972 | 990 | 190 |

EXAMPLE 4

A mixture of 100 g polydimethylsiloxane gum was prepared by thoroughly mixing with 30 g of silica (G) or Nipsil LP at room temperature using a kneader·mixer. After mixing, the mixture was dissolved in toluene. After removal of the silica by centrifugal separation, the molecular weight of the polymer was analyzed by gel permeation chromatography. The results are reported in Table V: polymer scission was remarkably suppressed using silica (G).

The same experiment was conducted using silica (H). In this case, 100 g polydimethylsiloxane gum was thoroughly mixed at room temperature with 30 g silica (H) or Aerosil 200, together with 3 g alpha, omega-dihydroxypolysiloxane. The molecular weight was measured as above. As demonstrated in Table V, polymer scission was suppressed using silica (H).

## Table V

| | molecular weight (MW) |
|---|---|
| blank | 540,000 |
| silica (G) | 450,000 |
| Nipsil LP | 300,000 |
| silica (H) | 520,000 |
| Aerosil 200 | 450,000 |

EXAMPLE 5

Twenty grams of a mixture of alpha, omega-divinylpolydimethylsiloxanes with degrees of polymerization of 10, 11 and 12 (25/65/10 molar ratio) was mixed with 2.0 g of Nipsil LP. After mixing 0.016 g triethylamine with this mixture, a small sample of it was added to benzene, and the pKa was then measured and was found to be approximately 6.8. The polymer component was centrifugally separated immediately after mixing and after aging at 50°C for 1 month, and the polysiloxane component was gas chromatographically analyzed. The octamethylcyclotetrasiloxane in the system was determined using n-undecane as the internal standard, and was found to be 12ppm immediately after mixing. After one month aging, the amount of octomethylcyclotetrasiloxane was found to be 15 ppm. Thus, octamethylcyclotetrasiloxane production was quite small, demonstrating a low siloxane bond ($Me_2Si-O-SiMe_2$) scission activity.

## EXAMPLE 6

A quantity of 100 g polydimethylsiloxane gum, to which a prescribed quantity of potassium butoxide had been added in advance, as shown in Table VI, was thoroughly mixed with 30 g Nipsil LP at room temperature using a kneader mixer. After mixing, the mixture was dissolved in toluene. After removal of the silica by centrifugal separation, the molecular weight of the polymer was measured by gel permeation chromatography. The results are reported in Table VI. Polymer scission with increasing quantity of $K^+$ ion (increase in basicity) was prevented.

## TABLE VI

|  | molecular weight (MW) |
|---|---|
| blank | 540,000 |
| $K^+$ ion 150 ppm | 350,000 |
| 300 ppm | 400,000 |
| 500 ppm | 480,000 |
| 1000 ppm | 500,000 |

## Claims

1. A silica-containing polyorganosiloxane composition comprising polyorganosiloxane and ultrafine silica powder, the ultrafine silica powder having an acid strength of greater than or equal to 4.0 and less than or equal to 9.2 in nonpolar solvent.

2. A silica-containing polyorganosiloxane composition comprising polyorganosiloxane, ultrafine silica powder, and a third component which causes the acid strength of the polyorganosiloxane-ultrafine silica powder mixture to have an acid strength of greater than or equal to 4.0 and less than or equal to 9.2 in nonpolar solvent.

3. Silica-containing polyorganosiloxane composition described in Claim 1, wherein the ultrafine silica powder is a hydrophilic silica.

4. Silica-containing polyorganosiloxane composition described in Claim 2, wherein the ultrafine silica powder is a hydrophilic silica.

5. Silica-containing polyorganosiloxane composition described in Claim 2, wherein the third component is alkali metal silanolate.

6. Silica-containing polyorganosiloxane composition described in Claim 2, wherein the third component is alkali metal carboxylate or alkaline earth metal carboxylate.

7. Silica-containing polyorganosiloxane composition described in Claim 2, wherein the third component is an organic amine.